# EUROPEAN PATENT APPLICATION

(11) **EP 2 804 045 A1**
(43) Date of publication of application: **19.11.2014**
(21) Application number: 14166301.3
(22) Date of filing: 29.04.2014
(51) Int. Cl.: G02F 1/1333, F21V 8/00

(54) **Display apparatus**

(30) Priority: 17.05.2013 JP 2013104901
(71) Applicant: Funai Electric Co., Ltd., Daito-shi, Osaka 574-0013 (JP)
(72) Inventor: Hayashi, Takumi, Osaka, 574-0013 (JP)
(74) Representative: Vigand, Philippe

(57) **Abstract**

A display apparatus including: a liquid crystal cell (10); a rear frame (8) located behind the liquid crystal cell (10); a backlight unit (16) located between the liquid crystal cell (10) and the rear frame (8), the backlight unit (16) being for emitting light toward the back surface (10a) of the liquid crystal cell (10); a diffusion sheet (38) located between the liquid crystal cell (10) and the backlight unit (16); and a support component (66) engaging the rear frame (8), the support component (66) being for supporting the diffusion sheet (38). The diffusion sheet (38) includes a support hole (54) through which the support component (66) passes.

## Description

### Field

The present invention relates to display apparatuses for displaying images.

### Background

Conventional display apparatuses include those equipped with a backlight unit which emits light toward the back surface of the display panel, such as those found in liquid crystal television receivers for example (for example, see Patent Literature (PTL) 1).

The housing of such a display apparatus includes a resin front cabinet disposed so as to cover the outer peripheral portion of the display panel and a resin rear frame located behind the display panel. An edge-lit backlight unit, for example, is located inward of the rear frame. The backlight unit includes a light emitting diode (LED) bar and a light guide plate. Light from the LED bar enters the light guide plate through the side surface and exits the light guide plate through the main surface toward the back surface of the display panel.

Additionally, an optical sheet such as a diffusion sheet is located between the light guide plate and the display panel. A support hole is provided at the top end portion of the optical sheet. A post related to the optical sheet is provided on the top end portion of the inner surface side of the rear frame and projects toward the optical sheet. The optical sheet is supported by the rear frame as a result of the optical sheet hanging from the post passing through the support hole.

### Citation List

### Patent Literature

[PTL 1] Japanese Patent No. 4321191

### Summary

### Technical Problem

The following problem has been found with the above-described conventional display apparatus. An oil such as a mold release agent is used when forming the rear frame by molding. If the post of the rear frame is inserted into the support hole in the optical sheet while this oil is on the post, oil runs from the post to the optical sheet. There is concern that the image quality of an image displayed on the display panel will suffer when oil buildup accumulates on the optical sheet.

It should be noted that degreasing the post to remove the oil from the post after the rear frame is formed, for example, is a conceivable solution to the above-described problem. However, with this method, a cleaning apparatus large enough to accommodate and degrease the entire rear frame is required. This increases the cost of the degreasing process.

The present invention aims to solve the above-described problem and provide a display apparatus that can minimize oil buildup on the optical sheet while reducing costs associated with degreasing.

### Solution to Problem

In order to solve the above-described problem, the display apparatus according to an aspect of the present invention is a display apparatus for displaying an image, the display apparatus including: a display panel; a rear component located behind the display panel; a backlight unit located between the display panel and the rear component, the backlight unit being for emitting light toward a back surface of the display panel; an optical sheet located between the display panel and the backlight unit; and a support component engaging the rear component, the support component being for supporting the optical sheet, herein the optical sheet includes a support hole through which the support component passes.

According to this aspect, the support component engaging the rear component is inserted through the support hole in the optical sheet. As a result, even if oil such as a mold release agent gets on the rear component during manufacturing of the display apparatus, it is possible to keep the oil from running on the optical sheet since the optical sheet does not come into contact with the rear component. Consequently, it is possible to prevent a decrease in quality of an image displayed on the display panel resulting from oil buildup on the optical sheet. It should be noted that if oil such as a mold release agent were to get on the support component, the support component may be degreased to remove the oil. In this case, a cleaning apparatus that is relatively smaller than one capable of degreasing the entire rear component can be used to degrease the support component. As such, costs associated with degreasing the support component can be reduced.

For example, in the display apparatus according to an aspect of the present invention, the rear component may include a post projecting toward the optical sheet, and the support component may have a cap shape, engage the post, and cover an outer peripheral portion of the post.

According to this aspect, since the cap-shaped support component engages the post and covers the outer peripheral portion of the post, even if oil such as a mold release agent were to get on the post during manufacturing of the display apparatus, the optical sheet does not contact the post. Consequently, oil can be kept from running on the optical sheet.

For example, in the display apparatus according to an aspect of the present invention, the support component may include a flange portion extending radially from the support component, at an end portion of the support component toward the rear component.

According to this aspect, since the flange portion is provided on an end portion of the support component toward the rear component, the optical sheet can be kept from contacting the rear component even more conclusively.

For example, in the display apparatus according to an aspect of the present invention, the support component may be made of an elastic material.

According to this aspect, since the support component is made of an elastic material, the peripheral edge portion of the support hole in the optical sheet digs into the outer peripheral surface of the support component. This keeps movement of the optical sheet relative to the support component to a minimum. This in turn makes it possible to, when a plurality of optical sheets are provided layered together, keep the plurality of optical sheets from rubbing against each other and minimize damage to the surfaces of the plurality of optical sheets caused by such rubbing.

For example, in the display apparatus according to an aspect of the present invention, the support component may include a tapered portion at an end portion opposite to an end portion toward the rear component.

According to this aspect, since the tapered portion is provided on an end portion of the support component opposite to the end portion toward the rear component, the support component can be smoothly inserted through the support hole in the optical sheet.

For example, in the display apparatus according to an aspect of the present invention, the support component may include: a support portion passing through the support hole in the optical sheet; and at an end portion of the support portion toward the rear component, an engagement portion engaging the rear component.

According to this aspect, since the support component includes a support portion and an engagement portion, the support component can be made to function as a post for supporting the optical sheet with the rear component.

For example, in the display apparatus according to an aspect of the present invention, the support component may further include, on the support portion, at least one hook portion elastically pressing against a peripheral edge portion of the support hole in the optical sheet.

According to this aspect, since the support component includes at least one hook portion, the at least one hook portion elastically presses against a peripheral edge portion of the support hole in the optical sheet. This keeps movement of the optical sheet relative to the support component to a minimum. This in turn makes it possible to, when a plurality of optical sheets are provided layered together, keep the plurality of optical sheets from rubbing against each other and minimize damage to the surfaces of the plurality of optical sheets caused by such rubbing.

For example, in the display apparatus according to an aspect of the present invention, the at least one hook portion may include two hook portions, and the two hook portions may be arranged substantially symmetrically to each other about the support portion.

According to this aspect, since the two hook portions are arranged substantially symmetrically to each other about the support portion, movement of the optical sheet relative to the support component can be kept to a minimum even more effectively.

For example, in the display apparatus according to an aspect of the present invention, the rear component may be a resin rear housing located on a rear side of the display apparatus.

According to this aspect, the rear component can be a resin rear housing.

For example, in the display apparatus according to an aspect of the present invention, the rear component may be a heat sink for dissipating heat from the backlight unit.

According to this aspect, the rear component can be a heat sink.

### Advantageous Effects

With the display apparatus according to an aspect of the present invention, oil buildup on the optical sheet can be minimized while reducing costs associated with degreasing.

### Brief Description of Drawings

[FIG. 1] FIG. 1 is a view of the outside of the display apparatus according to Embodiment 1.
[FIG. 2] FIG. 2 is a cross section illustrating relevant components in the display apparatus at the line A-A illustrated in FIG. 1.
[FIG. 3] FIG. 3 is a perspective view illustrating the three optical sheets.
[FIG. 4] FIG. 4 is an exploded perspective view illustrating relevant components of the display apparatus.
[FIG. 5] FIG. 5 is a perspective view of relevant components illustrating the support component before it engages the post.
[FIG. 6] FIG. 6 is a perspective view illustrating the support component.
[FIG. 7] FIG. 7 is a perspective view of relevant components illustrating the support component engaging the post.
[FIG. 8] FIG. 8 is a perspective view of relative components illustrating the three optical sheets supported by the rear frame.
[FIG. 9] FIG. 9 is a perspective view of relevant components illustrating the support component of the display apparatus according to Embodiment 2 before it engages the post.
[FIG. 10] FIG. 10 is a perspective view of relevant components illustrating the support component of the display apparatus according to Embodiment 2 engaging the post.
[FIG. 11] FIG. 11 is a perspective view of relevant components illustrating the support component of the display apparatus according to Embodiment 3 engaging the post.
[FIG. 12] FIG. 12 is a perspective view of relevant components illustrating the support component of the display apparatus according to Embodiment 4 before it engages the rear frame.
[FIG. 13] FIG. 13 is a perspective view illustrating the support component of the display apparatus according to Embodiment 4.
[FIG. 14] FIG. 14 is a perspective view of relevant components illustrating the support component of the display apparatus according to Embodiment 5 before it engages the rear frame.
[FIG. 15] FIG. 15 is a perspective view of relevant components illustrating the support component of the display apparatus according to Embodiment 5 engaging the rear frame.

### Description of Embodiments

Hereinafter, exemplary embodiments are described in greater detail with reference to the accompanying Drawings. It should be noted that the exemplary embodiments described below show specific examples of the present invention. The numerical values, shapes, materials, structural elements, and the arrangement and connection of the structural elements etc. shown in the following embodiments are mere examples, and therefore do not limit the present invention, the scope of which is defined in the appended Claims. Therefore, among the structural elements in the following exemplary embodiments, structural elements not recited in any one of the independent claims are described as preferred structural elements, and are not absolutely necessary to overcome the problem according to the present invention.

### Embodiment 1

### (Overall Configuration of the Display Apparatus)

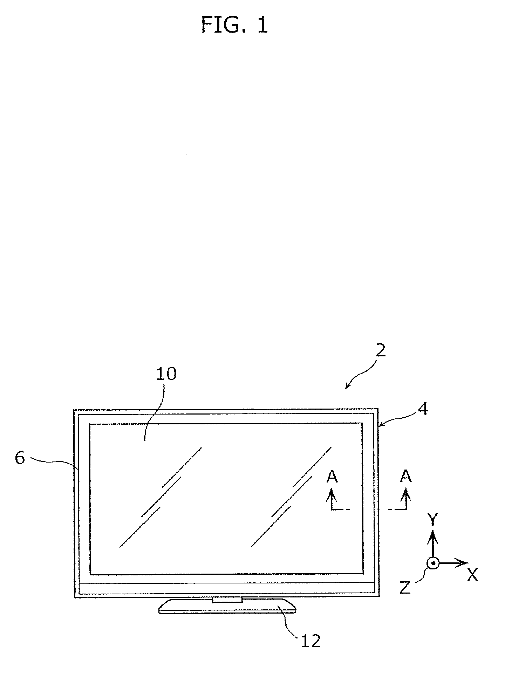

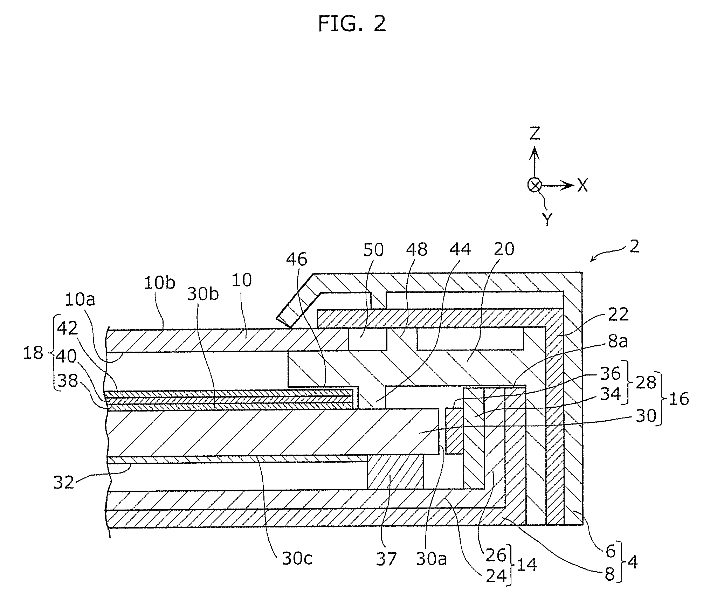

First, the overall configuration of the display apparatus according to Embodiment 1 will be described with reference to FIG. 1 and FIG. 2. FIG. 1 is a view of the outside of the display apparatus according to Embodiment 1 of the present invention. FIG. 2 is a cross section illustrating relevant components in the display apparatus at the line A-A illustrated in FIG. 1.

As is illustrated in FIG. 1 and FIG. 2, the display apparatus 2 according to Embodiment 1 is a liquid crystal television receiver including a housing 4. A front cabinet 6 and a rear frame 8 (the rear frame 8 is one example of the rear component; the rear frame 8 is one example of the rear housing) are put together to form the housing 4.

The front cabinet 6 is frame-shaped and disposed so as to cover the outer peripheral portion of a liquid crystal cell 10 (the liquid crystal cell 10 is one example of the display panel) to be described later. The rear frame 8 is disposed so as to cover the back surface side of the liquid crystal cell 10. In other words, the rear frame 8 is located behind the display apparatus 2. A stand 12 for supporting the housing 4 from below is attached to the bottom end portion of the rear frame 8. It should be noted that the front cabinet 6 and the rear frame 8 are made of, for example, resin.

As is illustrated in FIG. 2, a heat sink 14 (the heat sink 14 is one example of the rear component), a backlight unit 16, three optical sheets 18, a molded frame 20, the liquid crystal cell 10, and a bezel 22 are disposed in the housing 4.

The heat sink 14 includes a flat heat dissipation portion 24 and a fitting portion 26 which extends substantially vertical from one end portion of the heat dissipation portion 24 toward the liquid crystal cell 10. In other words, the heat sink 14 has a cross section that is substantially L-shaped. The heat dissipation portion 24 is attached to the inner surface side of the rear frame 8 with screws (not shown in the drawings). The fitting portion 26 faces a side surface 30a of a light guide plate 30 (to be described later). It should be noted that the heat sink 14 is made of a metal having high thermal conductivity, such as aluminum.

The backlight unit 16 is, for example, an edge-lit backlight unit, and is located between the rear frame 8 and the liquid crystal cell 10. The backlight unit 16 is for emitting light toward a back surface 10a of the liquid crystal cell 10. The backlight unit 16 includes an LED bar 28, the light guide plate 30, and a reflective sheet 32.

The LED bar 28 includes a wiring substrate 34 and a plurality of LEDs 36. The wiring substrate 34 has an elongated plate-like shape. The wiring substrate 34 is attached to the fitting portion 26 of the heat sink 14 with thermally conductive double sided tape (not shown in the drawings). It should be noted that the wiring substrate 34 is made of a metal having high thermal conductivity, such as aluminum. The LEDs 36 are mounted on the wiring substrate 34. The LEDs 36 are arranged in a line in the lengthwise direction of the wiring substrate 34 (Y axis direction) and spaced apart from each other. It should be noted that each of the LEDs 36 is, for example, a chip-type LED.

The light guide plate 30 is rectangular in shape. A main surface 30b of the light guide plate 30 faces the back surface 10a of the liquid crystal cell 10. The side surface 30a of the light guide plate 30 faces the LEDs 36. The light guide plate 30 is supported by the heat dissipation portion 24 of the heat sink 14 via a cushion 37 made of, for example, a rubber material.

The reflective sheet 32 is disposed so as to cover a back surface 30c of the light guide plate 30 (the surface located on an opposite side of the light guide plate 30 relative to the main surface 30a). The reflective sheet 32 functions to reflect, toward the main surface 30b, light entering the light guide plate 30 through the side surface 30a.

The three optical sheets 18 include, for example, a diffusion sheet 38, a lens sheet 40, and a protective sheet 42. It should be noted that the diffusion sheet 38, the lens sheet 40, and the protective sheet 42 are also collectively referred to as "the three optical sheets 18". The diffusion sheet 38 functions to diffuse light emitting from the main surface 30b of the light guide plate 30. The lens sheet 40 functions to guide the light diffused by the diffusion sheet 38 to the back surface 10a of the liquid crystal cell 10. The protective sheet 42 is for protecting the diffusion sheet 38 and the lens sheet 40. The diffusion sheet 38, the lens sheet 40, and the protective sheet 42 are layered together and supported by the rear frame 8 so as to cover the main surface 30b of the light guide plate 30. A characteristic of the display apparatus 2 according to Embodiment 1 lies in the structure of the rear frame 8 that supports the above-described three optical sheets 18. The structure that supports the three optical sheets 18 will be described later.

The molded frame 20 is frame-shaped and attached to an opening portion 8a of the rear frame 8. The molded frame 20 is for supporting the outer peripheral portion of the liquid crystal cell 10 from the back surface 10a side. A portion of the molded frame 20 is located between the outer peripheral portion of the liquid crystal cell 10 and the outer peripheral portion of the light guide plate 30.

A first protrusion 44 is provided on the back surface (the surface facing the light guide plate 30) of the molded frame 20. The tip of the first protrusion 44 touches the main surface 30b of the light guide plate 30. The first protrusion 44 is for securing a gap 46 between the molded frame 20 and the outer peripheral portion of the light guide plate 30. The outer peripheral portion of each of the above-described three optical sheets 18 is positioned in the gap 46.

A second protrusion 48 is provided on the back surface (the surface facing the liquid crystal cell 10) of the molded frame 20. The second protrusion 48 is for securing a gap 50 between the molded frame 20 and a bezel 22 (to be described later). The outer peripheral portion of the liquid crystal cell 10 is positioned in this gap 50.

The liquid crystal cell 10 has a rectangular, panel-like shape.

The outer peripheral portion of the liquid crystal cell 10 is supported by the inner peripheral portion of the molded frame 20 (the portion of the molded frame 20 inward relative to the second protrusion 48).

The bezel 22 is frame-shaped and disposed so as to cover the outer peripheral portion of the main surface 10b of the liquid crystal cell 10 (the surface located on an opposite side of the liquid crystal cell 10 relative to the back surface 10a). The bezel 22 and the molded frame 20 are each attached to the opening portion 8a of the rear frame 8 with screws (not shown in the drawings).

It should be noted that the front cabinet 6 is attached to the rear frame 8 with screws (not shown in the drawings) so as to cover the bezel 22.

### (Structure Supporting the Optical Sheet)

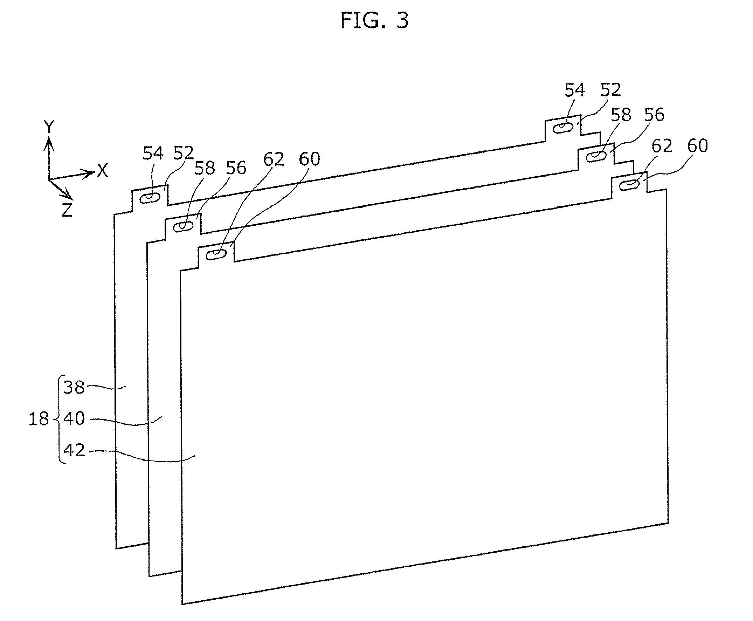

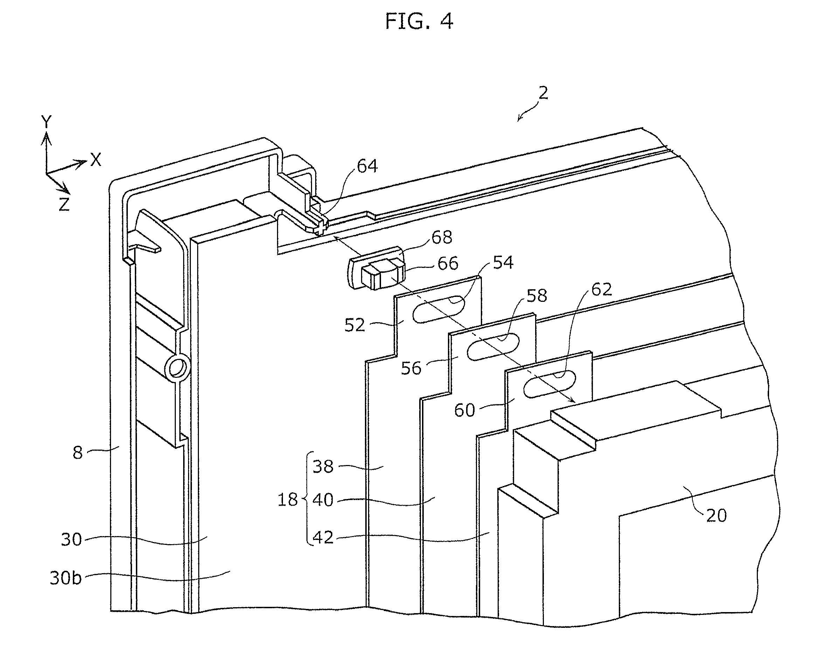

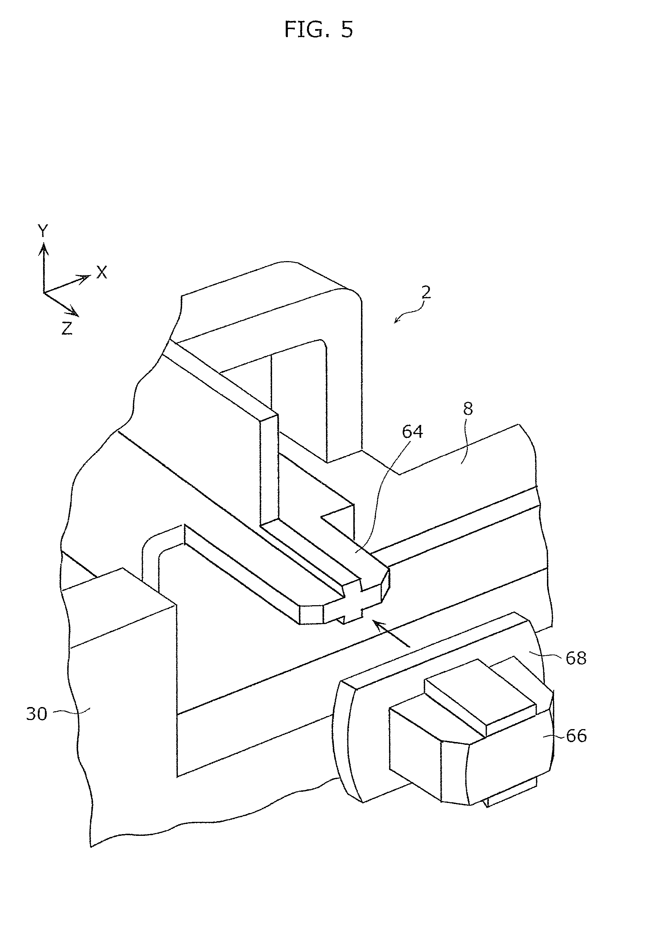

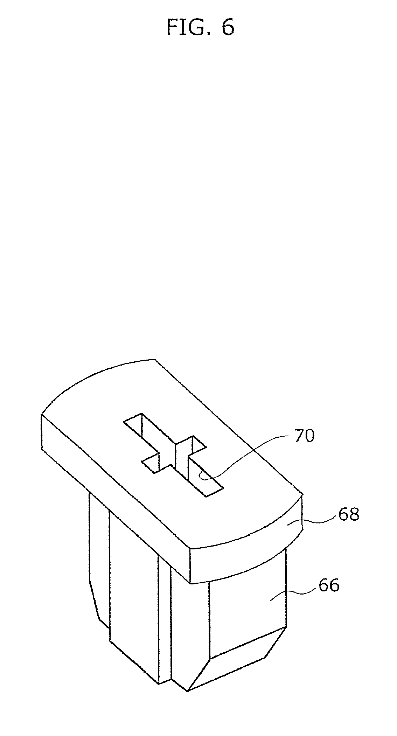

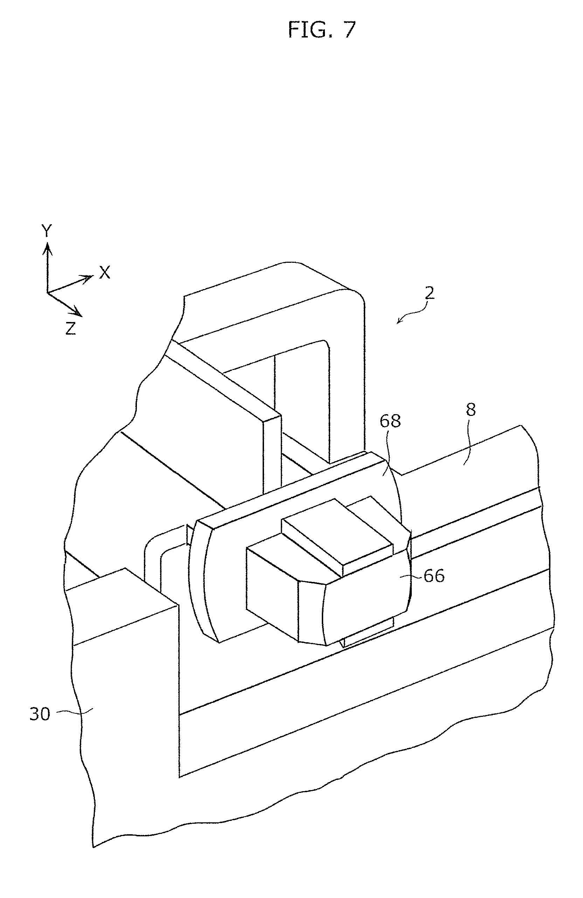

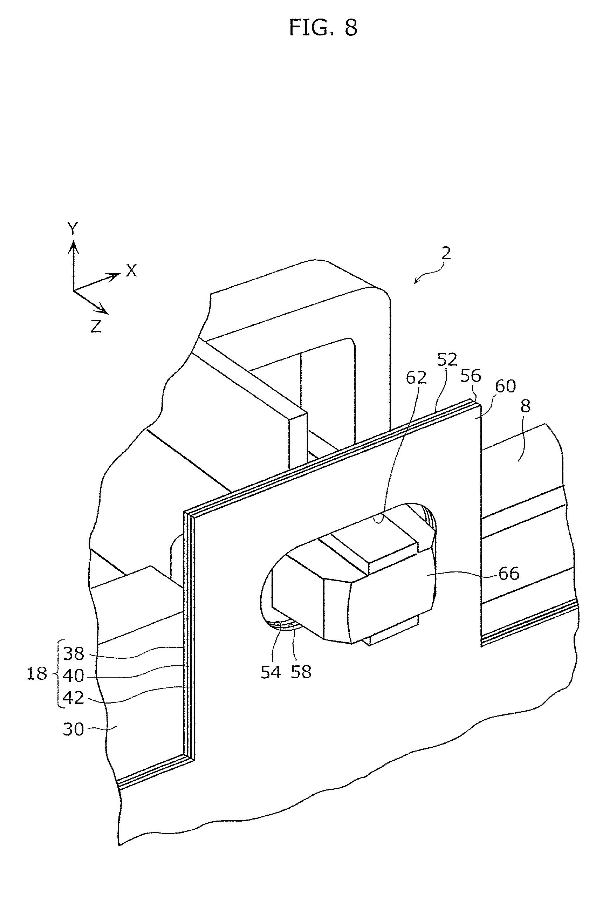

Next, the structure of the rear frame 8 that supports the three optical sheets 18 described above will be described with reference to FIG. 3 through FIG. 8. FIG. 3 is a perspective view illustrating the three optical sheets. FIG. 4 is an exploded perspective view illustrating relevant components of the display apparatus. FIG. 5 is a perspective view of relevant components illustrating the support component before it engages the post. FIG. 6 is a perspective view illustrating the support component. FIG. 7 is a perspective view of relevant components illustrating the support component engaging the post. FIG. 8 is a perspective view of relative components illustrating the three optical sheets supported by the rear frame.

First, the configuration of each of the three optical sheets 18 will be described with reference to FIG. 3. As is illustrated in FIG. 3, two tabs 52 extending upward are provided at the top end portion of the diffusion sheet 38. The two tabs 52 are spaced apart from each other. Each of the two tabs 52 includes an oval support hole 54.

Two tabs 56 extending upward are provided at the top end portion of the lens sheet 40. The two tabs 56 are spaced apart from each other. Each of the two tabs 56 includes an oval support hole 58.

Two tabs 60 extending upward are provided at the top end portion of the protective sheet 42. The two tabs 60 are spaced apart from each other. Each of the two tabs 60 includes an oval support hole 62.

It should be noted that the distance in the X axis direction between the above-described two support holes 54, the distance in the X axis direction between the above-described two support holes 58, and the distance in the X axis direction between the above-described two support holes 62 are roughly the same.

Next, the configuration of the rear frame 8 will be described with reference to FIG. 4 through FIG. 7. As is illustrated in FIG. 4, two posts 64 projecting toward the three optical sheets 18 are provided at the top end portion of the rear frame 8. It should be noted that the two posts 64 are provided built-in to the rear frame 8 to support the three optical sheets 18. The distance between the two posts 64 in the X axis direction is roughly the same as the distance in the X axis direction between the above-described two support holes 54, two support holes 58, and two support holes 62. It should be noted that for the sake of simplicity, only one of the two posts 64 is illustrated in FIG. 4. Each of the two posts 64 has a cross-shaped cross section, where the horizontal portion of the cross is longer than the vertical portion of the cross, as is illustrated in FIG. 5.

As is illustrated in FIG. 4 and FIG. 5, a support component 66 engages each of the two posts 64. The support component 66 is cap-shaped. The support component 66 also has a cross-shaped cross section, where the horizontal portion of the cross is longer than the vertical portion of the cross. It should be noted that the support component 66 is made of resin, such as polystyrene. A flange portion 68 is provided on an end portion of the support component 66 toward the rear frame 8. The flange portion 68 extends radially from the support component 66. Furthermore, as is illustrated in FIG. 6, a recess portion 70 is provided on an end portion the support component 66 toward the rear frame 8. The recess portion 70 has a shape that corresponds to the shape of the post 64. The post 64 can be inserted into the recess portion 70. As is illustrated in FIG. 7, as a result of the post 64 being inserted into the recess portion 70, the support component 66 engages the post 64 and covers the outer peripheral portion of the post 64.

Next, the procedure for supporting the three optical sheets 18 with the rear frame 8 will be described with reference to FIG. 7 and FIG. 8. First, during manufacturing of the display apparatus 2, the rear frame 8 is formed by molding. Next, as is illustrated in FIG. 7, the support component 66 is placed so as to engage each of the two posts 64. Then, as is illustrated in FIG. 8, the support component 66 engaging each of the two posts 64 is placed through the support hole 54 in the diffusion sheet 38, the support hole 58 in the lens sheet 40, and the support hole 62 in the protective sheet 42. With this, the three optical sheets 18 are supported by the by the rear frame 8 as a result of the three optical sheets 18 hanging from the support components 66 engaging the two posts 64. The three optical sheets 18 are, as described above, layered together and supported by the rear frame 8 so as to cover the main surface 30b of the light guide plate 30.

It should be noted that the support components 66 engaging the two posts 64 are pinned against the rear frame 8 side of the molded frame 20, as is illustrated in FIG. 4. This keeps the support components 66 from disengaging with the two posts 64.

### (Operation of Display Apparatus)

Next, a brief description of the operation of the above-described display apparatus 2 will be given. Light is emitted from each of the LEDs 36 when the LEDs 36 are turned on. The light from each of the LEDs 36 enters the light guide plate 30 through the side surface 30a. The light entering through the side surface 30a of the light guide plate 30 propagates into the light guide plate 30 while reflecting off the reflective sheet 32, and then is emitted from the main surface 30b of the light guide plate 30. After passing through the diffusion sheet 38, the lens sheet 40, and the protective sheet 42, the light emitted from the main surface 30b of the light guide plate 30 enters the liquid crystal cell 10 through the back surface 10a thereof. An image is displayed on the liquid crystal cell 10 as a result of the light shining on the back surface 10a of the liquid crystal cell 10.

It should be noted that the LEDs 36 generate heat when they light up. The heat from the LEDs 36 is transferred to the heat dissipation portion 24 via the wiring substrate 34, the double sided tape, and the fitting portion 26. The heat transferred to the heat dissipation portion 24 dissipates to the air.

### (Advantageous Effect)

Next, the advantageous effects of the display apparatus 2 according to Embodiment 1 will be described. As is described above, the support component 66 engages the post 64 and covers the outer peripheral portion of the post 64. With this, even if oil such as a mold release agent gets on either one of the two posts 64 during manufacturing of the display apparatus 2, it is possible to keep the oil from running on the three optical sheets 18 since the three optical sheets 18 do not come into contact with the two posts 64. Consequently, it is possible to prevent a decrease in quality of an image displayed on the liquid crystal cell 10 resulting from oil buildup on the three optical sheets 18.

Moreover, since, as described above, the flange portion 68 is provided on an end portion of the support component 66 toward the rear frame 8, none of the three optical sheets 18 come in contact with the rear frame 8. With this, even if oil such as a mold release agent gets on the rear frame 8 during manufacturing of the display apparatus 2, it is possible to even more effectively keep the oil from running on the three optical sheets 18.

It should be noted that if oil such as a mold release agent were to get on the support component 66, the support component 66 may be degreased to remove the oil. In this case, a cleaning apparatus that is relatively smaller than one capable of degreasing the entire rear frame 8 can be used to degrease the support component 66. As such, costs associated with degreasing the support component 66 can be reduced.

### Embodiment 2

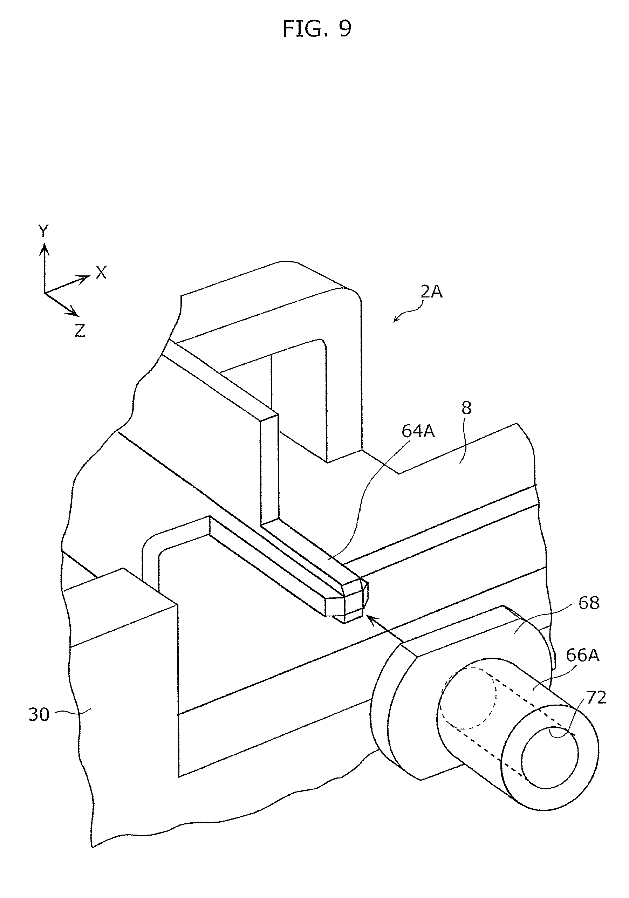

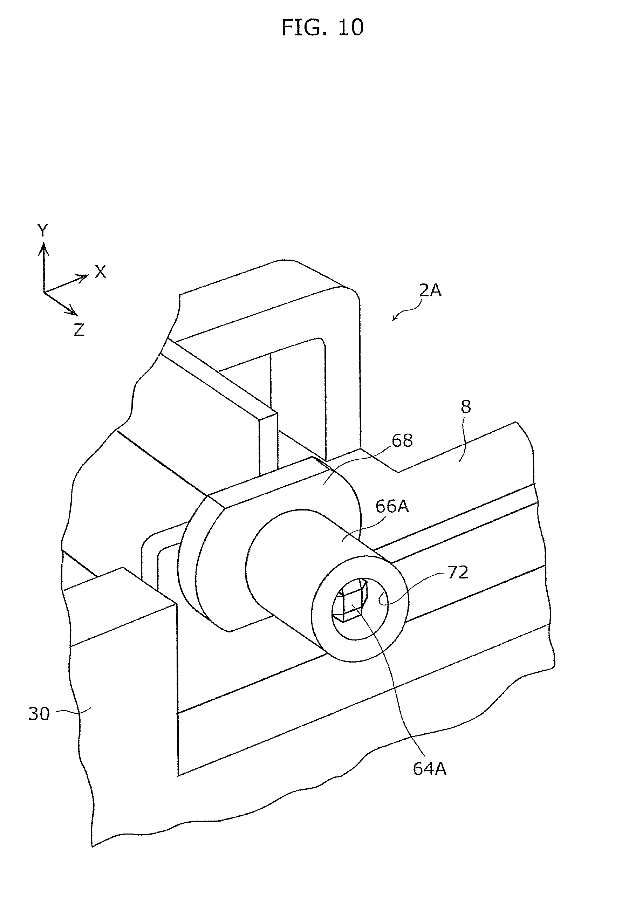

Next, the structure of the display apparatus according to Embodiment 2 will be described with reference to FIG. 9 and FIG. 10. FIG. 9 is a perspective view of relevant components illustrating the support component of the display apparatus according to Embodiment 2 before it engages the post. FIG. 10 is a perspective view of relevant components illustrating the support component of the display apparatus according to Embodiment 2 engaging the post. It should be noted that in each of the following embodiments, the structural elements that are the same as in Embodiment 1 have the same reference numerals as in Embodiment 1. As such, descriptions thereof are omitted.

As is illustrated in FIG. 9, with the display apparatus 2A according to Embodiment 2, each of two posts 64A has a cross-shaped cross section. It should be noted that the horizontal width of each of the two posts 64A (the width in the X axis direction) is less than the horizontal width of each of the two posts 64 according to Embodiment 1 described above.

As is illustrated in FIG. 9, a support component 66A is cylindrical and shaped like a cap. A flange portion 68 is provided on an end portion of the support component 66A toward the rear frame 8. The flange portion 68 extends radially from the support component 66A. The support component 66A also includes a through-hole 72 extending therethrough along the axis of the support component 66A (in the Z axis direction). The diameter of the through-hole 72 corresponds to the diameter of the post 64A. As is illustrated in FIG. 10, as a result of the post 64A being inserted into the through-hole 72, the support component 66A engages the post 64A and covers the outer peripheral portion of the post 64A.

In addition to the advantageous effects achieved with the above-described Embodiment 1, Embodiment 2 also achieves the following advantageous effects. As a result of the support component 66A having a cylindrical tube shape, the rotational orientation of the support component 66A relative to the post 64A is irrelevant when engaging the support component 66A with the post 64A. This makes the process of engaging the support component 66A with the post 64A more efficient.

### Embodiment 3

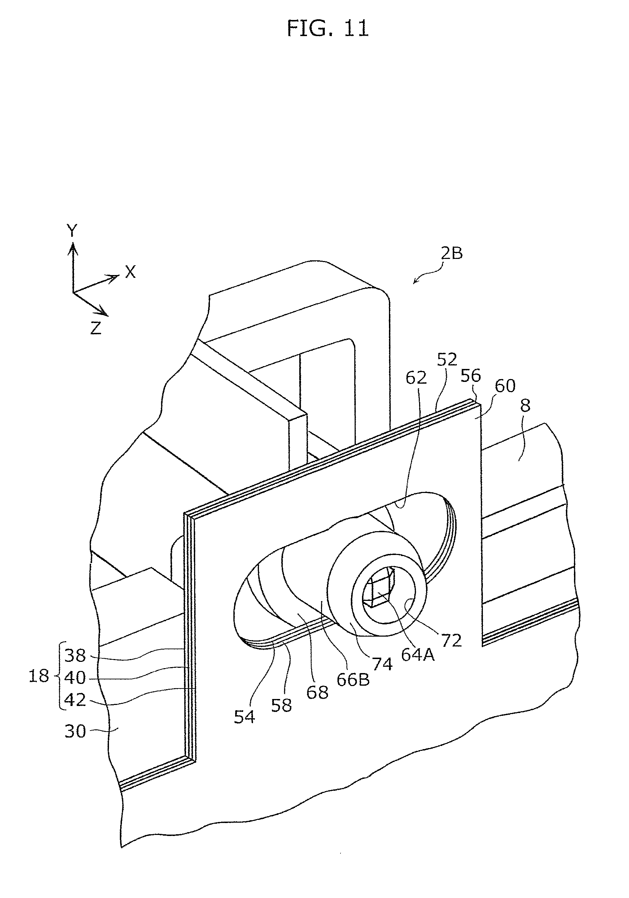

Next, the structure of the display apparatus according to Embodiment 3 will be described with reference to FIG. 11. FIG. 11 is a perspective view of relevant components illustrating the support component of the display apparatus according to Embodiment 3 engaging the post.

As is illustrated in FIG. 11, with the display apparatus 2B according to Embodiment 3, a support component 66B is cylindrical and shaped like a cap. The support component 66B is made of an elastic material having an elastic restoring force, such as rubber. A flange portion 68 is provided on an end portion of the support component 66B toward the rear frame 8. The flange portion 68 extends radially from the support component 66B. A tapered portion 74 is provided on the support component 66B at an end portion thereof opposite to an end portion toward the rear frame 8. The support component 66B also includes a through-hole 72 extending therethrough along the axis of the support component 66B. As a result of the post 64A being inserted into the through-hole 72, the support component 66B engages the post 64A and covers the outer peripheral portion of the post 64A. It should be noted that the post 64A has the same shape as the post 64A according to Embodiment 2.

In addition to the advantageous effects achieved with the above-described Embodiment 1, Embodiment 3 also achieves the following advantageous effects. As described above, since the support component 66B is made of an elastic material, the peripheral edge portion of each of the support hole 54 of the diffusion sheet 38, the support hole 58 of the lens sheet 40, and the support hole 62 of the protective sheet 42 digs into the outer peripheral surface of the support component 66B. This keeps movement of the three optical sheets 18 relative to the support component 66B to a minimum. This in turn makes it possible to keep the three optical sheets 18 from rubbing against each other and minimize damage to the surfaces of the three optical sheets 18 caused by such rubbing.

Furthermore, as described above, since the tapered portion 74 is provided on the support component 66B at an end portion thereof opposite to an end portion toward the rear frame 8, the support component 66B can be smoothly inserted through the support hole 54 of the diffusion sheet 38, the support hole 58 of the lens sheet 40, and the support hole 62 of the protective sheet 42.

### Embodiment 4

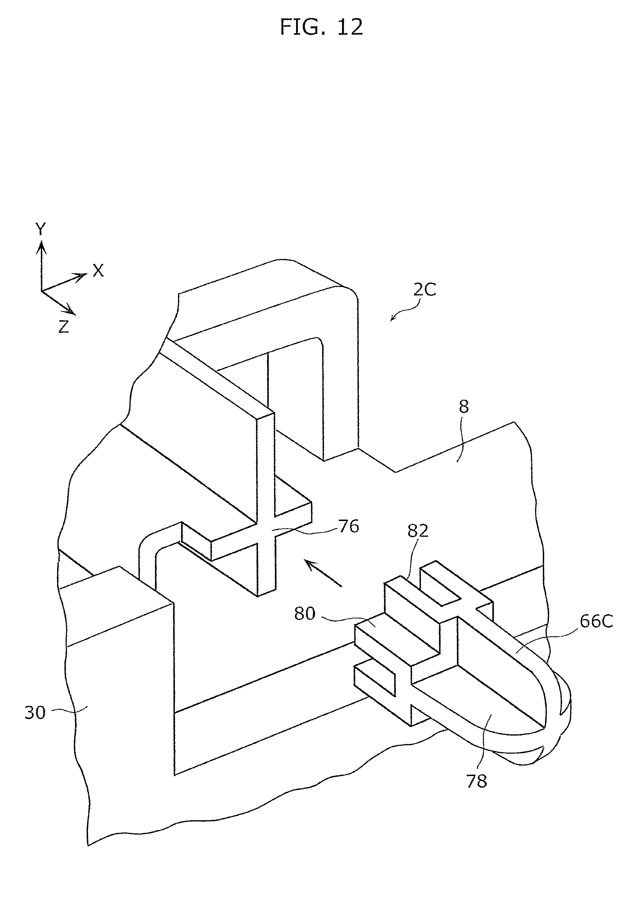

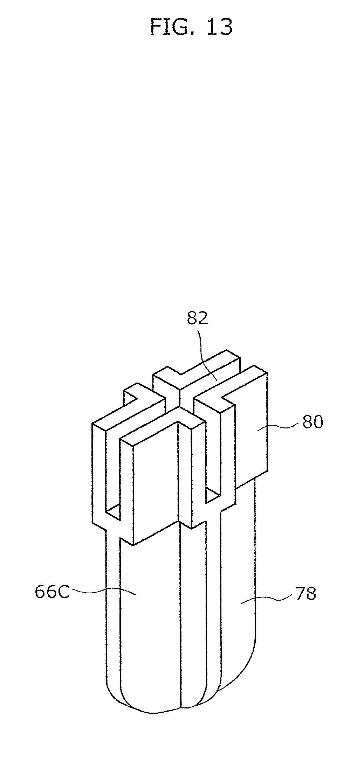

Next, the structure of the display apparatus according to Embodiment 4 will be described with reference to FIG. 12 and FIG. 13.

FIG. 12 is a perspective view of relevant components illustrating the support component of the display apparatus according to Embodiment 4 before it engages the rear frame. FIG. 13 is a perspective view illustrating the support component of the display apparatus according to Embodiment 4.

As is illustrated in FIG. 12, with the display apparatus 2C according to Embodiment 4, two projecting portions 76 for engaging a support component 66C with the rear frame 8 are provided on the rear frame 8 instead of the posts 64 and 64A according to Embodiments 1 through 3. Each of the two projecting portions 76 has a cross-shaped cross section. It should be noted that for the sake of simplicity, only one of the two projecting portions 76 is illustrated in FIG. 12.

As is illustrated in FIG. 12 and FIG. 13, the support component 66C includes: a support portion 78; and an engagement portion 80 provided on an end portion of the support portion 78 toward the rear frame 8. The support portion 78 has a cross-shaped cross section. A recess portion 82 having a shape that corresponds to the shape of the projecting portion 76 is provided on the engagement portion 80. The projecting portion 76 can be inserted into the recess portion 82. The above-described support component 66C functions as a post for supporting the three optical sheets 18 (see FIG. 8). It should be noted that the support component 66 is made of resin, such as polystyrene.

As is illustrated in FIG. 12, the support component 66C engages the rear frame 8 as a result of the projecting portion 76 being inserted into the recess portion 82. Additionally, the support portion 78 is inserted though each of the support holes 54, 58, and 62 of the three optical sheets 18 (see FIG. 8).

The display apparatus 2C according to Embodiment 4 achieves the following advantageous effects. As described above, each of the three optical sheets 18 is supported by the two support components 66C engaging the rear frame 8. As such, even if oil such as a mold release agent gets on the rear frame 8 during manufacturing of the display apparatus 2C, none of the three optical sheets 18 directly contact the rear frame 8. Consequently, oil can be kept from running on each of the three optical sheets 18.

It should be noted that if oil such as a mold release agent were to get on the support component 66C, the support component 66C may be degreased to remove the oil. In this case, a cleaning apparatus that is relatively smaller than one capable of degreasing the entire rear frame 8 can be used to degrease the support component 66C. As such, costs associated with degreasing the support component 66C can be reduced.

### Embodiment 5

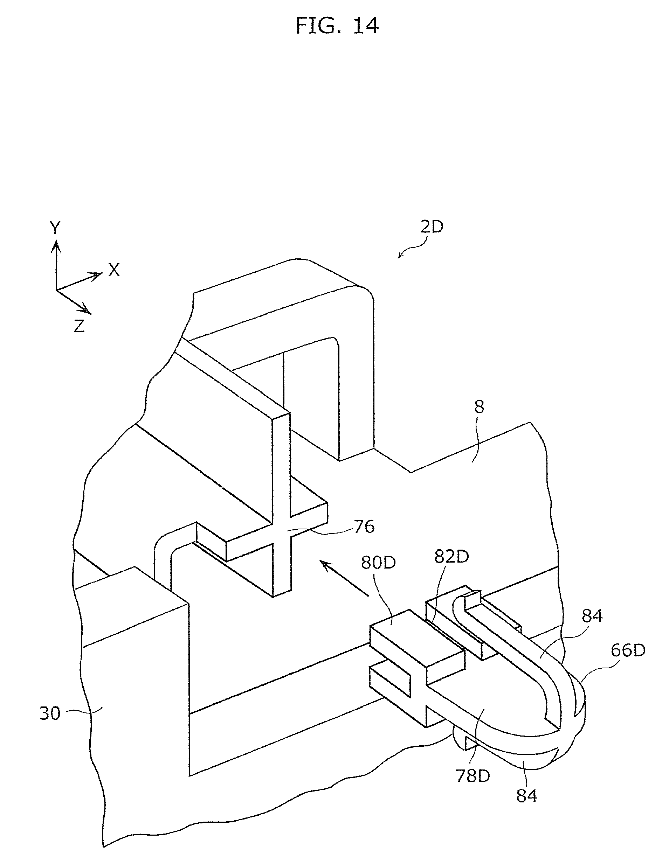

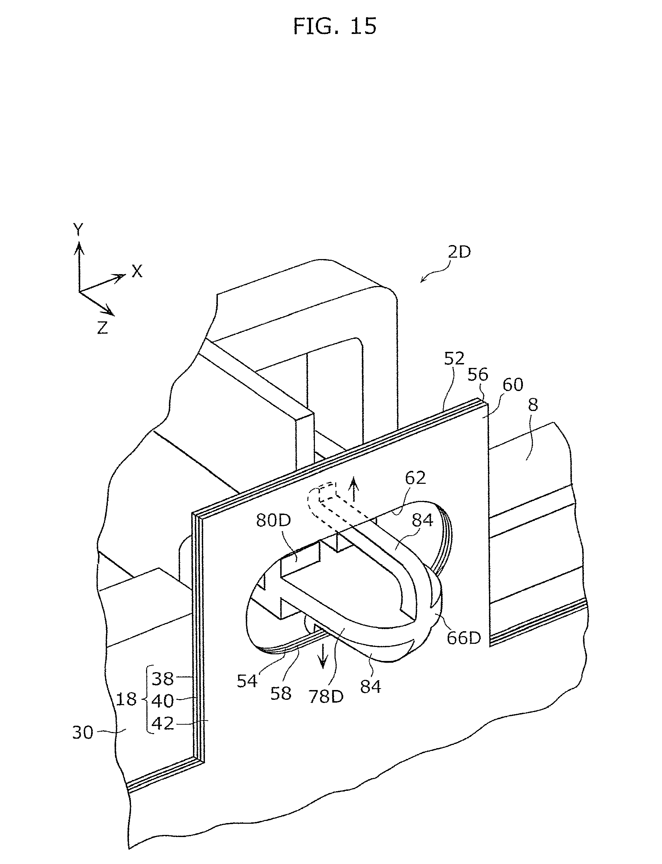

Next, the structure of the display apparatus according to Embodiment 5 will be described with reference to FIG. 14 and FIG. 15. FIG. 14 is a perspective view of relevant components illustrating the support component of the display apparatus according to Embodiment 5 before it engages the rear frame. FIG. 15 is a perspective view of relevant components illustrating the support component of the display apparatus according to Embodiment 5 engaging the rear frame.

As is illustrated in FIG. 14, with the display apparatus 2D according to Embodiment 5, a support component 66D includes: a support portion 78D; and an engagement portion 80D provided on an end portion of the support portion 78D toward the rear frame 8. Two hook portions 84 are provided on the support portion 78D at an end portion thereof opposite to an end portion toward the rear frame 8. The two hook portions 84 extend toward the engagement portion 80 and are arranged substantially symmetrically to each other about the support portion 78D. The two hook portions 84 have an elastic restoring force and are biased in a direction away from each other. A recess portion 82D having a shape that corresponds to the shape of the projecting portion 76 is provided on the engagement portion 80D. The projecting portion 76 can be inserted into the recess portion 82D. The above-described support component 66D functions as a post for supporting the three optical sheets 18. It should be noted that the support component 66D is made of resin, such as polystyrene.

As is illustrated in FIG. 15, the support component 66D engages the rear frame 8 as a result of the projecting portion 76 being inserted into the recess portion 82D. Additionally, the support portion 78D is inserted though each of the support holes 54, 58, and 62 of the three optical sheets 18 and the two hook portions 84 elastically deform in a direction toward each other. As is indicated by the arrows illustrated in FIG. 15, the two hook portions 84 elastically press against the peripheral edge portion of each of the support holes 54, 58, and 62 due to the elastic restoring force of the hook portions 84. This keeps movement of the three optical sheets 18 relative to the support component 66B to a minimum. As such, the same advantageous effects according to Embodiment 3 described above are achieved.

The display apparatus has herein been exemplified based on Embodiments 1 through 5 of the present invention, but the present invention is not limited to these embodiments. For example, the above embodiments may be arbitrarily combined.

In each of the above embodiments, the display apparatus is exemplified as a liquid crystal television receiver, but other than a liquid crystal television receiver, the display apparatus may be, for example, a liquid crystal monitor for a computer.

In each of the above embodiments, three optical sheets are used, but the present invention is not limited to this example. For example, one, two, or four or more optical sheets can be used.

In each of the above embodiments, the rear component which engages with the support component is exemplified as a rear frame, but the rear component which engages with the support component can be a heat sink. In this case, the support component engages, for example, with both a post provided on the rear frame and a boss (protrusion) provided on the heat sink. With this, the optical sheets hang from the post on the rear frame and the boss on the heat sink, and are thereby supported by the rear frame and the heat sink.

In the above Embodiments 1 through 3, a flange portion is provided on an end of the support component toward the rear frame, but the flange portion may be omitted.

Although the present invention has been described and illustrated in detail, it is clearly understood that the same is by way of example only and is not to be taken by way of limitation, the scope of the present invention being limited only by the terms of the appended claims.

### Industrial Applicability

The display apparatus according to an aspect of the present invention is applicable as, for example, a liquid crystal television receiver.

### Reference Signs List

2, 2A, 2B, 2C, 2D display apparatus
4 housing
6 front cabinet
8 rear frame
8a opening portion
10 liquid crystal cell
10a, 30c back surface
10b, 30b main surface
12 stand
14 heat sink
16 backlight unit
18 optical sheet
20 molded frame
22 guide member
24 heat dissipation portion
26 fitting portion
28 LED bar
30 light guide plate
30a side surface
32 reflective sheet
34 wiring substrate
36 LED
37 cushion
38 diffusion sheet
40 lens sheet
42 protective sheet
44 first protrusion
46, 50 gap
48 second protrusion
52, 56, 60 tab
54, 58, 62 support hole
64, 64A post
66, 66A, 66B, 66C, 66D support component
68 flange portion
70, 82, 82D recess portion
72 through-hole
74 tapered portion
76 projecting portion
78, 78D support portion
80, 80D engagement portion
84 hook portion

## Claims

1. A display apparatus for displaying an image, the display apparatus comprising:
a display panel;
a rear component located behind the display panel;
a backlight unit located between the display panel and the rear component, the backlight unit being for emitting light toward a back surface of the display panel;
an optical sheet located between the display panel and the backlight unit; and
a support component engaging the rear component, the support component being for supporting the optical sheet,
wherein the optical sheet includes a support hole through which the support component passes.

2. The display apparatus according to Claim 1,
wherein the rear component includes a post projecting toward the optical sheet, and
the support component has a cap shape, engages the post, and covers an outer peripheral portion of the post.

3. The display apparatus according to Claim 2,
wherein the support component includes a flange portion extending radially from the support component, at an end portion of the support component toward the rear component.

4. The display apparatus according to Claim 2 or 3,
wherein the support component is made of an elastic material.

5. The display apparatus according to Claim 4,
wherein the support component includes a tapered portion at an end portion opposite to the end portion toward the rear component.

6. The display apparatus according to Claim 1,
wherein the support component includes:
a support portion passing through the support hole in the optical sheet; and
at an end portion of the support portion toward the rear component, an engagement portion engaging the rear component.

7. The display apparatus according to Claim 6,
wherein the support component further includes, on the support portion, at least one hook portion elastically pressing against a peripheral edge portion of the support hole in the optical sheet.

8. The display apparatus according to Claim 7,
wherein the at least one hook portion includes two hook portions, and
the two hook portions are arranged substantially symmetrically to each other about the support portion.

9. The display apparatus according to any one of Claims 1 to 8,
wherein the rear component is a resin rear housing located on a rear side of the display apparatus.

10. The display apparatus according to any one of Claims 1 to 8,
wherein the rear component is a heat sink for dissipating heat from the backlight unit.
